# EUROPÄISCHE PATENTANMELDUNG

(11) **EP 1 616 751 A1**
(43) Veröffentlichungstag der Anmeldung: **18.01.2006**
(21) Anmeldenummer: 04016336.2
(22) Anmeldetag: 12.07.2004
(51) Int. Cl.: B60P 3/025, B62D 63/06

(54) **Lastkraftwagen, Anhänger oder Sattelanhänger mit einer aufklappbaren Seitenwand**

(71) Anmelder: Franz Achleitner Fahrzeugbau und Reifenzentrum GmbH, 6300 Wörgl (AT)
(72) Erfinder: Schroll, Johann, 6361 Hopfgarten (AT)
(74) Vertreter: Hofinger, Stephan

(57) **Zusammenfassung**

Lastkraftwagen, Sattelanhänger oder Lastkraftwagenanhänger (1) mit einem Aufbau (2), aus dem seitlich zumindest nach einer Seite mittels mindestens eines Hydraulikzylinders (10) meine Dachfläche (4a, 4b) ausklappbar ist, wobei der mindestens eine Hydraulikzylinder (10,11) im ausgeklappten Zustand der Dachfläche (4a, 4b) außen auf der Dachfläche (4a, 4b) liegt.

## Beschreibung

Die vorliegende Erfindung betrifft einen Lastkraftwagen, Sattelanhänger oder Lastkraftwagenanhänger mit einem Aufbau, aus dem seitlich zumindest nach einer Seite mittels mindestens eines Hydraulikzylinders eine Dachfläche ausklappbar ist.

Derartige Lastkraftwagen oder Lastkraftwagenanhänger werden verwendet, um an beliebigen Orten innerhalb weniger Stunden eine mobile Küche, Werkstatt, Bühne, ein Restaurant oder Ähnliches aufzubauen. Dabei wird aus dem vorerst übliche Abmaße eines Fahrzeugaufbaus aufweisenden Aufbau zumindest nach einer Seite eine Dachfläche und zusätzlich vorzugsweise eine Bodenfläche ausgeklappt. Bestehen Bodenfläche und Dachfläche aus zwei Segmenten und wird gleichzeitig eine Ausklappung nach beiden Seiten des Aufbaus vorgenommen, entsteht ein großflächiger, gebäudeähnlicher Raum, der vielfältig genutzt werden kann.

Bisher waren der oder die Hydraulikzylinder zum Ausklappen der Dachfläche derart angeordnet, dass sie im ausgeklappten Zustand der Dachfläche an deren Innenseite liegen. Damit sind sie vor Witterungseinflüssen geschützt und leicht zugänglich. Allerdings führen innenliegende Hydraulikzylinder zu einer Verringerung der Raumhöhe zwischen Bodenfläche und Dachfläche und bei Leckagen zu einer Verschmutzung des Innenraums.

Diese Nachteile werden erfindungsgemäß dadurch behoben, dass der mindestens eine Hydraulikzylinder im ausgeklappten Zustand der Dachfläche außen auf der Dachfläche liegt.

Die Anordnung des oder der Hydraulikzylinder an der Außenseite ist konstruktiv deutlich aufwendiger und verlangt eine witterungsfeste Ausgestaltung der exponierten Teile, insbesondere der beweglichen Teile. Erzielt wird jedoch nicht nur die Vermeidung oben angeführter Nachteile, sondern auch die Beseitigung von Verletzungsgefahr, da die beweglichen Teile auf der vom Innenraum abgewandten Seite der Dachfläche liegen.

Um ein möglichst kompaktes Zusammenfalten der vorzugsweise aus zwei gelenkig miteinander verbundenen Segmenten bestehenden Dachfläche während des Transports zu ermöglichen, ist vorzugsweise vorgesehen, dass der mindestens eine Hydraulikzylinder zum Ausklappen der äußeren Dachfläche über eine zusammenklappbare Schere angelenkt ist. Werden die innere und äußere Dachfläche zusammengeklappt, faltet sich die Schere ebenfalls zusammen und nimmt kaum mehr Platz in Anspruch.

Zusätzlich kann vorgesehen sein, dass der oder die Hydraulikzylinder im zusammengeklappten Zustand der Dachfläche bündig zwischen auf der Außenseite der Dachfläche angeordneten Verstärkungsrippen liegen. Dadurch wird der Stauraum für die zusammengefaltete Dachfläche im Inneren des Aufbaus minimiert.

Eine weitere Variante sieht vor, dass aus dem Aufbau seitlich zumindest nach einer Seite zusätzlich eine Bodenfläche ausklappbar ist, wobei zwischen Bodenfläche und Dachfläche eine Vielzahl von Stützen einsetzbar ist, die mit der Bodenfläche und der Dachfläche verriegelbar ist. Durch die Verriegelung zwischen Dachfläche und Bodenfläche wird die Dachfläche gegen ein Abheben unter Windeinfluss mit dem gesamten Gewicht der Bodenfläche beschwert, wodurch ein derartiges Abheben wirksam verhindert wird.

Für ein rasches Einsetzen der Stützen ist es günstig, wenn diese gleichzeitig und/oder wahlweise mit der Bodenfläche und der Dachfläche verriegelbar sind. Dies erlaubt es, die Stützen vorerst mit der ausgeklappten Bodenfläche zu verriegeln, sodass die aufgestellten Stützen nicht mehr gehalten werden müssen. Anschließend wird die Dachfläche, in die vorerst nur die Einführdorne der Stützen hineinragen, zur Gänze flachgeklappt. Passt der Abstand, können die Stützen sofort gleichzeitig mit der Bodenfläche und der Dachfläche verriegelt werden. Ansonsten werden die Stützen nunmehr ausschließlich mit der Dachfläche verriegelt, wonach der Monteur sich mit seinem Gewicht an die Stütze hängen und die Dachfläche soweit herunterziehen kann, bis auch eine Verriegelung mit der Bodenfläche möglich ist.

Im Sinne einer raschen Montage ist vorzugsweise vorgesehen, dass die Stützen werkzeuglos, insbesondere durch Drehen um die Längsachse, formschlüssig verriegelbar sind. Damit wird die Montagezeit im Vergleich zum Stand der Technik stark reduziert.

Um auf einfache Weise eine Verkleidung anbringen zu können, sieht eine bevorzugte Ausführungsform vor, dass die Stützen mit einer Führungsschiene verbindbar sind, wobei die Führungsschienen in die Stützen vorzugsweise einhängbar sind. Dies erlaubt es, zwischen je zwei Stützen von den Führungsschienen gehaltene Paneele einzusetzen, die die Wandflächen zwischen Bodenfläche und Dachfläche bilden. Ebenso können niedrige Flächenelemente, die eine Art Geländer bilden, eingesetzt werden.

Weitere Merkmale und Einzelheiten der vorliegenden Erfindung ergeben sich aus der nachfolgenden Figurenbeschreibung. Dabei zeigt:
- Fig. 1: eine perspektivische Gesamtansicht eines erfindungsgemäßen Sattelanhängers,
- Fig. 2a: einen Ausschnitt der Dachfläche,
- Fig. 2b: einen weiteren Ausschnitt der Dachfläche,
- Fig. 3: eine Stütze mit dazugehöriger Führungsschiene,
- Fig. 4: einen Querschnitt durch eine Stütze mit eingesetzten Paneelen,
- Fig. 5a: den Bodenverschluss der Stütze in Explosionsdarstellung,
- Fig. 5b: den Bodenverschluss in verriegeltem Zustand,
- Fig. 6a: den Dachverschluss in Explosionsdarstellung,
- Fig. 6b: den Dachverschluss in verriegeltem Zustand
- Fig. 7a - 7c: den Bodenverschluss in unterschiedlichen Stellungen und
- Fig. 8a - 8c: den Dachverschluss in unterschiedlichen Stellungen.

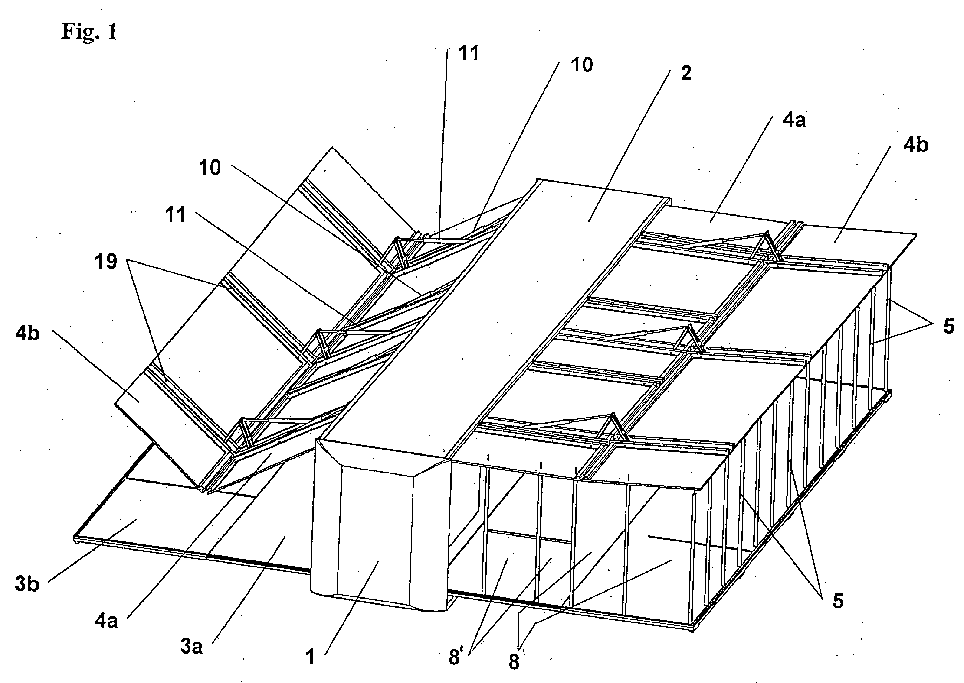

Wie aus Fig. 1 ersichtlich, weist der erfindungsgemäße Sattelanhänger 1, bei dem es sich ebenso gut um den Lastkraftwagen selbst oder dessen Anhänger handeln könnte, einen zentralen Aufbau 2 auf. In diesem Aufbau 2 sind im Transportzustand die Bodenfläche 3a, 3b und die Dachfläche 4a, 4b zusammengefaltet untergebracht. Innen liegt dabei die Bodenfläche 3a, 3b, die in Form eines nach unten offenen V einklappt. Außerhalb liegt die Dachfläche 4a, 4b, die in Form eines nach oben offenen V zusammenlegbar ist.

Vor dem Ausklappen der Bodenfläche 3a, 3b werden unterhalb der Bodenfläche 3a, 3b Steher angeordnet, die ein Auflager für die ausgeklappte Bodenfläche 3a, 3b bilden. Zwischen den (nicht dargestellten) Stehern befinden sich Schienen, an denen die Vorderkante der äußeren Bodenfläche 3b mittels Rollen abrollen kann. Das Ausschwenken erfolgt mittels Hydraulikzylindern an der Unterseite der inneren Bodenfläche 3a, die aufgrund dieser Anordnung in Fig. 1 nicht sichtbar sind.

Um das Ausklappen der Bodenfläche 3a, 3b zu ermöglichen, muss zuvor die innere Dachfläche 4a mit der daran angelenkten äußeren Dachfläche 4b angehoben werden. Erst dann kann die weiter innen im Aufbau 2 liegende Bodenfläche 3a, 3b ausgeklappt werden.

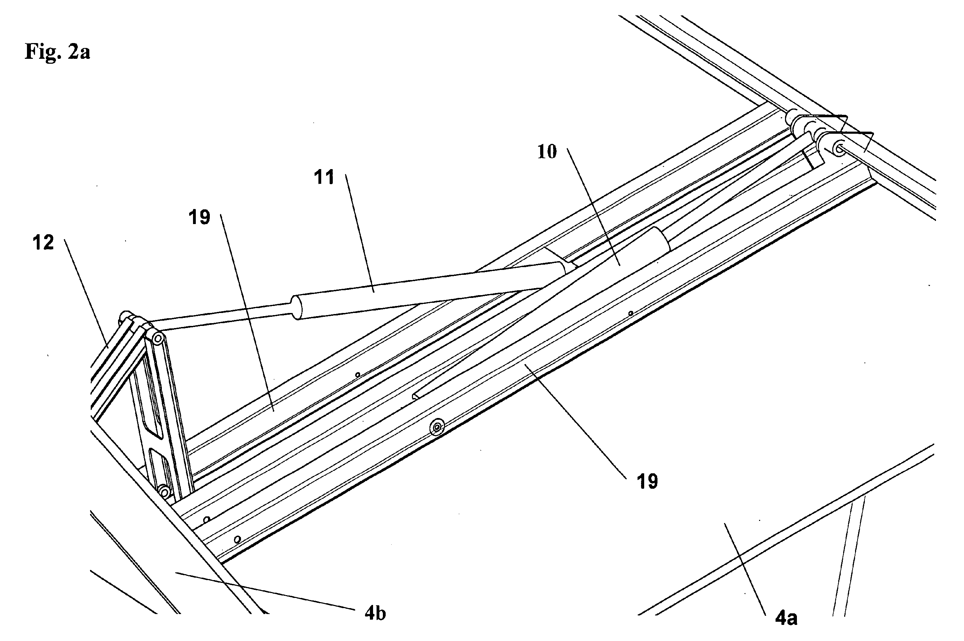

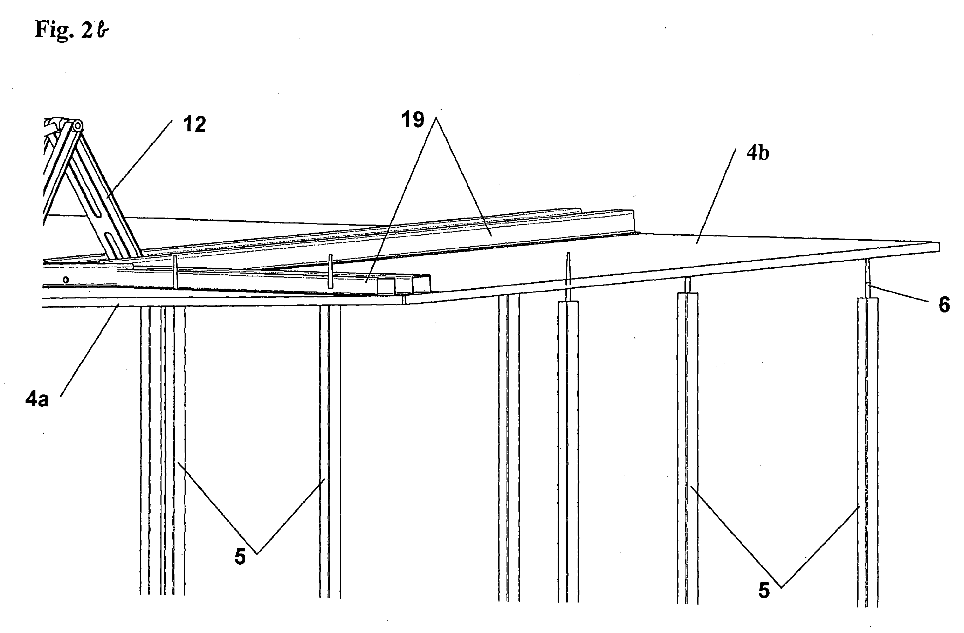

Für die Bewegung der Dachfläche 4a, 4b sind zwei Gruppen von Hydraulikzylindern vorgesehen (siehe insbesondere Fig. 2a und 2b). Die innere Dachfläche 4a wird mittels der Hydraulikzylinder 10 bewegt, die äußere Dachfläche 4b mittels der Hydraulikzylinder 11. Die Hydraulikzylinder 11 greifen indirekt über eine zusammenklappbare Schere 12 an, wodurch im Transportzustand ein im Wesentlichen paralleles Aufeinanderfalten der beiden Dachflächen 4a und 4b ermöglicht wird. Die Hydraulikzylinder 10 und 11 sowie die Scheren 12 verschwinden dabei bündig zwischen den auf die Dachflächen 4a und 4b aufgesetzten Versteifungsrippen 19.

Nachdem die Bodenfläche 3a, 3b vollständig in den horizontalen Zustand ausgeklappt ist, wird die innere Dachfläche 4a gemeinsam mit der äußeren Dachfläche 4b etwas über den horizontalen Endzustand angehoben. Dies ermöglicht es, entlang des Randes der Bodenfläche 3a, 3b eine Vielzahl von Stützen 5 einzusetzen. Dabei werden die Einführdorne 6 durch die Dachfläche 4a, 4b hindurchgeschoben, wonach die Stützen 5 mit der Bodenfläche 3a, 3b verriegelt werden, sodass sie nicht mehr gehalten werden müssen. Dieser Zwischenzustand ist für die äußere Dachfläche 4b in Fig. 2 gut erkennbar.

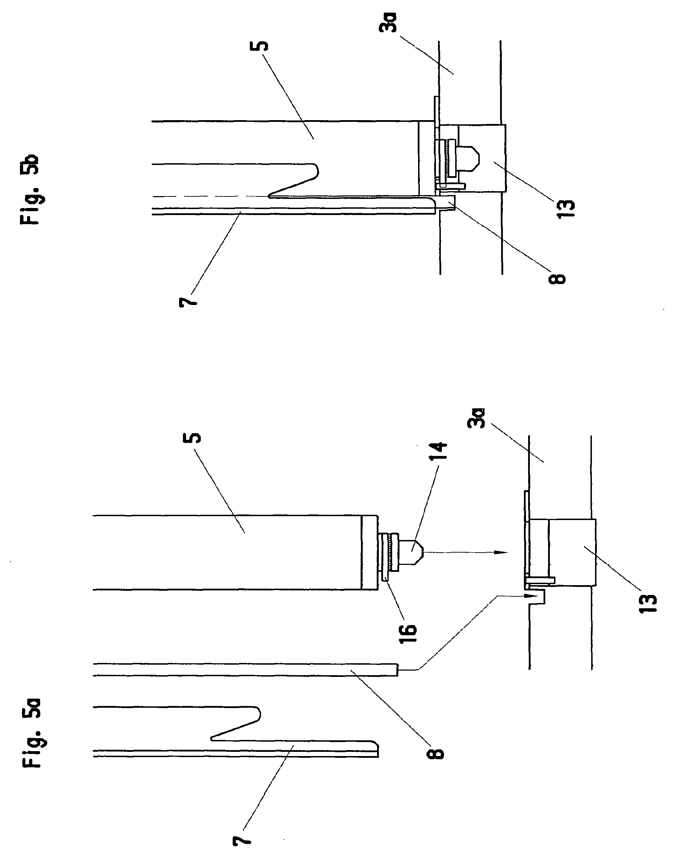

Nunmehr wird die Dachfläche 4a, 4b, in die vorerst nur die Einführdorne 6 der Stützen 5 hineinragten, zur Gänze bis in die Horizontalposition flachgeklappt. Bei jenen Stützen 5, bei denen der Abstand zwischen Bodenfläche 3a, 3b und Dachfläche 4a, 4b passt, können die Stützen 5 sofort gleichzeitig mit der Bodenfläche 3a, 3b und der Dachfläche 4a, 4b verriegelt werden. Ansonsten werden die Stützen 5 nunmehr ausschließlich mit der Dachfläche 4a, 4 b verriegelt, wonach der Monteur sich mit seinem Gewicht an die Stützen 5 hängen und die Dachfläche 4a, 4b soweit herunterziehen kann, bis auch eine Verriegelung mit der Bodenfläche 3a, 3b möglich ist. Auf die Details der Verriegelung wird im Zusammenhang mit der Beschreibung der Fig. 5a bis 8c näher eingegangen.

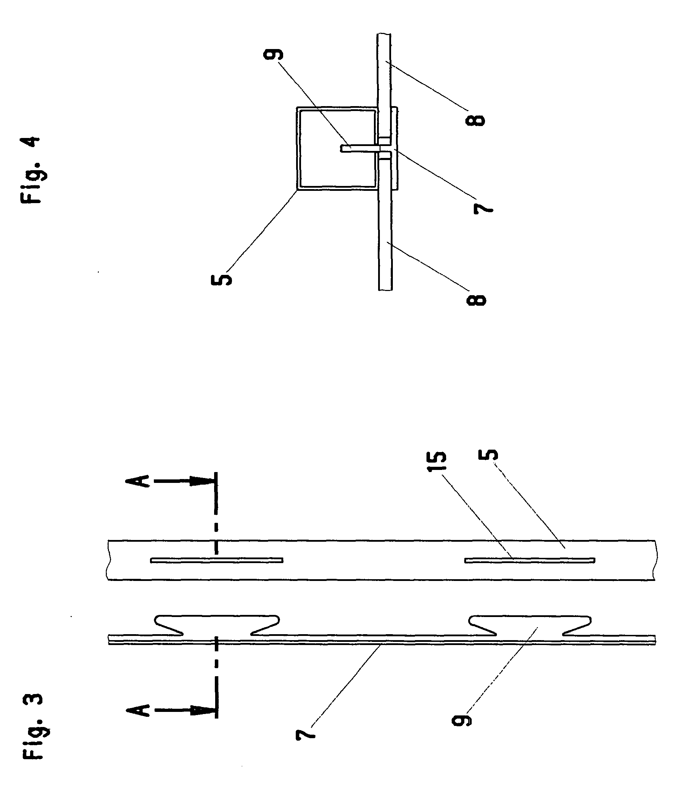

Der Aufbau der Stützen 5 ist aus den Fig. 3 und 4 erkennbar. Es handelt sich dabei um im Querschnitt im Wesentlichen quadratische Rohre, die beabstandete Längsschlitze 15 aufweisen. In diese Längsschlitze 15 können mittels keilförmig auseinanderlaufenden Fortsätze 9 Führungsschienen 7 eingehängt werden. Diese Führungsschienen 7 ermöglichen die Befestigung von Paneelen 8 zwischen den Säulen 5, wie dies aus Fig. 4 ersichtlich ist. Je nach Verwendungszweck können die Paneele 8 aus transparentem oder jedem beliebigen anderen Material sein. Auch ist es möglich, halbhohe Paneele 8' in der Art eines Geländers anzuordnen (siehe Fig. 1).

Der in den Fig. 5 a und 5b dargestellte Bodenverschluss 14 der Stützen 5, weist einen asymmetrischen Fortsatz 16 auf, der in eine korrespondierende Bodenbuchse 13 in der Bodenfläche 3a, 3b eingesetzt und durch Drehen der Stütze 5 um die Längsachse werkzeuglos formschlüssig verriegelbar ist.

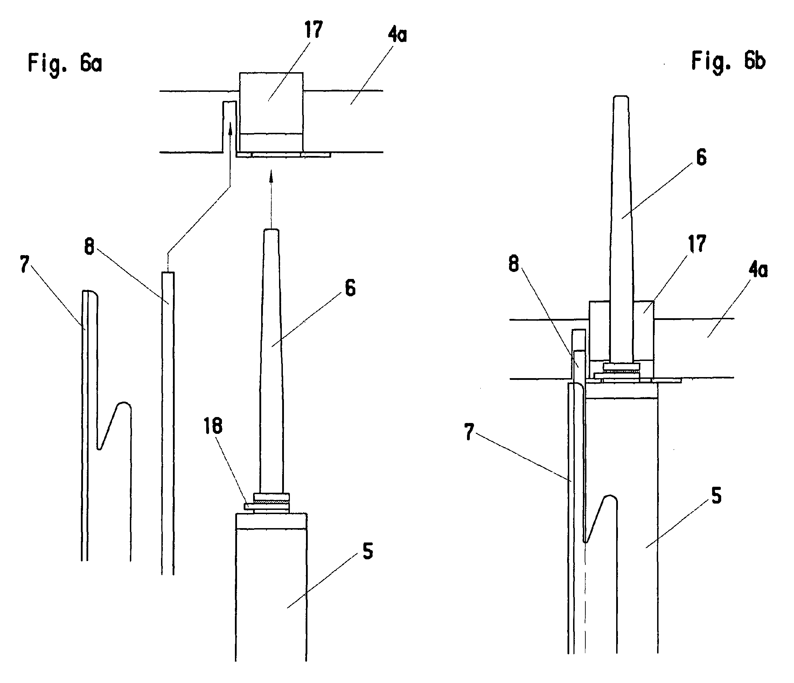

Ähnlich funktioniert der in den Fig. 6a und 6b dargestellte Dachverschluss, bei dem der asymmetrische Fortsatz 18 mit der Dachbuchse 17 zusammenwirkt. Der Einführdorn 6 ist durch die Dachbuchse 17 hindurchführbar.

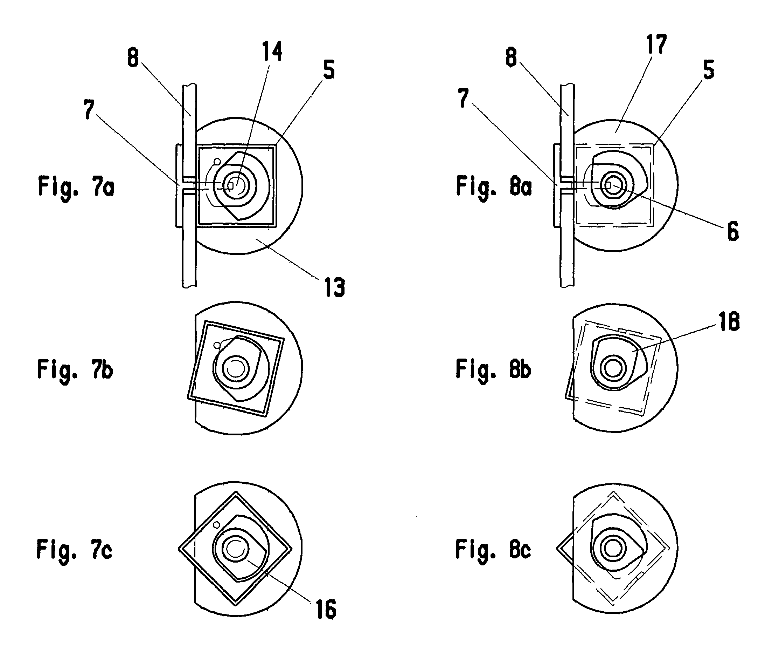

Die Abfolgen 7a bis 7c und 8a bis 8c zeigen zusammengehörige Verriegelungspositionen, wobei die Fig. 7a bis 7c den Boden und die Fig. 8a bis 8c das Dach betreffen. In den Fig. 7a und 8a ist die Stütze 5 sowohl mit der Bodenfläche 3a, 3b, als auch mit der Dachfläche 4a, 4b verriegelt. Hingegen ist bei den Fig. 7b und 8b die Stütze 5 lediglich mit der Bodenfläche 3a, 3b verriegelt, nicht jedoch mit der Dachfläche 4a, 4b. Schließlich zeigen die Fig. 7c und 8c den Zustand der Nachjustierung, bei dem die Stütze 5 lediglich mit der Dachfläche 4a, 4b verriegelt ist, nicht jedoch mit der Bodenfläche 3a, 3b. Der Übergang zwischen den einzelnen dargestellten Positionen erfolgt durch Verdrehen der Stütze 5 um die Längsachse.

## Patentansprüche

1. Lastkraftwagen, Sattelanhänger oder Lastkraftwagenanhänger (1) mit einem Aufbau (2), aus dem seitlich zumindest nach einer Seite mittels mindestens eines Hydraulikzylinders (10) eine Dachfläche (4a, 4 b) ausklappbar ist, **dadurch gekennzeichnet, dass** der mindestens eine Hydraulikzylinder (10, 11) im ausgeklappten Zustand der Dachfläche (4a, 4b) außen auf der Dachfläche (4a, 4b) liegt.

2. Lastkraftwagen, Sattelanhänger oder Lastkraftwagenanhänger nach Anspruch 1, **dadurch gekennzeichnet, dass** die Dachfläche (4a, 4b) aus zwei gelenkig miteinander verbundenen Segmenten besteht, wobei zum Ausklappen der beiden Segmente der Dachfläche (4a, 4b) unabhängige Hydraulikzylinder (10, 11) vorgesehen sind, die im ausgeklappten Zustand der Dachfläche (4a, 4b) außen auf der Dachfläche (4a, 4b) liegen.

3. Lastkraftwagen, Sattelanhänger oder Lastkraftwagenanhänger nach Anspruch 2, **dadurch gekennzeichnet, dass** der mindestens eine Hydraulikzylinder (11) zum Ausklappen der äußeren Dachfläche (4b) über eine zusammenklappbare Schere (12) angelenkt ist.

4. Lastkraftwagen, Sattelanhänger oder Lastkraftwagenanhänger nach einem der Ansprüche 1 bis 3, **dadurch gekennzeichnet, dass** der oder die Hydraulikzylinder (10, 11) im zusammengeklappten Zustand der Dachfläche (4a, 4b) bündig zwischen auf der Außenseite der Dachfläche (4a, 4b) angeordneten Verstärkungsrippen (19) liegen.

5. Lastkraftwagen, Sattelanhänger oder Lastkraftwagenanhänger nach einem der Ansprüche 1 bis 4, **dadurch gekennzeichnet, dass** aus dem Aufbau (2) seitlich zumindest nach einer Seite zusätzlich eine Bodenfläche (3a, 3b) ausklappbar ist, wobei zwischen Bodenfläche (3a, 3b) und Dachfläche (4a, 4b) eine Vielzahl von Stützen (5) einsetzbar ist, die mit der Bodenfläche (3a, 3b) und der Dachfläche (4a, 4b) verriegelbar ist.

6. Lastkraftwagen, Sattelanhänger oder Lastkraftwagenanhänger nach Anspruch 5, **dadurch gekennzeichnet, dass** die Stützen (5) gleichzeitig und/oder wahlweise mit der Bodenfläche (3a, 3b) und der Dachfläche (4a, 4b) verriegelbar sind.

7. Lastkraftwagen, Sattelanhänger oder Lastkraftwagenanhänger nach Anspruch 5 oder 6, **dadurch gekennzeichnet, dass** die Stütze (5) insbesondere durch Drehen um die Längsachse formschlüssig verriegelbar ist.

8. Lastkraftwagen, Sattelanhänger oder Lastkraftwagenanhänger nach einem der Ansprüche 5 bis 7, **dadurch gekennzeichnet, dass** die Stützen (5) Einführdorne (6) aufweisen.

9. Lastkraftwagen, Sattelanhänger oder Lastkraftwagenanhänger nach einem der Ansprüche 5 bis 8, **dadurch gekennzeichnet, dass** die Stützen (5) mit Führungsschienen (7) verbindbar sind.

10. Lastkraftwagen, Sattelanhänger oder Lastkraftwagenanhänger nach Anspruch 9,**dadurch gekennzeichnet, dass** zwischen je zwei Stützen (5) von den Führungsschienen (7) gehaltene Paneele (8) einsetzbar sind.
